# EUROPÄISCHE PATENTSCHRIFT

(11) **EP 0 951 619 B1**
(45) Veröffentlichungstag und Bekanntmachung des Hinweises auf die Patenterteilung: **18.09.2002**
(21) Anmeldenummer: 97953882.4
(22) Anmeldetag: 19.12.1997
(51) Int. Cl.: F16D 25/08

(54) **REIBUNGSKUPPLUNG**
FRICTION CLUTCH
EMBRAYAGE A FRICTION

(30) Priorität: 19.12.1996 DE 19652777
(43) Veröffentlichungstag der Anmeldung: 27.10.1999
(73) Patentinhaber: Volkswagen Aktiengesellschaft, 38436 Wolfsburg (DE); LuK Lamellen und Kupplungsbau Beteiligungs KG, 77813 Bühl (DE)
(72) Erfinder: HERZIG, Stefan, D-38547 Calberlah (DE); OSTERLÄNGER, Jürgen, D-91448 Emskirchen (DE); GRELL, Karl-Ludwig, D-91086 Aurachtal (DE); STRIAN, Ernst, D-91358 Kunreuth (DE)
(86) Internationale Anmeldenummer: EP9707184
(87) Internationale Veröffentlichungsnummer: WO98027349

(56) Entgegenhaltungen:
- DE-A- 4 120 643
- DE-A- 4 400 357
- GB-A- 2 164 494
- US-A- 4 705 151
- US-A- 4 867 294

## Beschreibung

Die Erfindung betrifft eine Reibungskupplung für Kraftfahrzeuge mit einer zwischen Bauteilen einspannbaren Kupplungsscheibe, die drehfest auf einer Getriebewelle sitzt, einer Kupplungsfeder zum Einspannen der Kupplungsscheibe zwischen den beiden Bauteilen, einer Kupplungsbetätigungseinrichtung mit einer kupplungsnahen Nehmereinrichtung einer kupplungsfernen Gebereinrichtung sowie einer dazwischen angeordneten Übertragungseinrichtung, wobei die kupplungsnahe Nehmereinrichtung einen feststehenden Nehmerzylinder und einen darin bewegbaren Kolben aufweist und im wesentlichen parallel zu dem Verschiebeweg des Kolbens ein Wegsensor mit einer veränderlichen Induktivität vorgesehen ist.

Eine Reibungskupplung der oben genannten Art ist z. B. in der deutschen Offenlegungsschrift DE 41 20 643 A1 beschrieben. In dem dortigen Nehmerzylinder ist ein Wegsensor mit einem veränderlichen Widerstand, einer veränderlichen Kapazität oder einer veränderlichen induktion vorgesehen. Wird ein Wegsensor mit einem veränderlichen Widerstand, einer veränderlichen Kapazität oder einer veränderlichen Induktion gewählt, so müssen zwei Kabel aus der Nehmereinrichtung herausgeführt werden. Das Führen der Kabel kann insbesondere bei sich zueinander bewegenden Bauteilen problematisch sein. Ein weiteres Problem der beiden Wegsensoren ist, daß in einer derartigen Nehmereinrichtung viele bewegte metallische Bauteile vorhanden sind, die die veränderliche für das Meßsignal ursächliche Größe, wie z. B. Kapazität, Widerstand oder Induktion, beeinflussen können. Weiterhin kann die Funktion der Wegsensoren durch Verunreinigungen, wie z. B. durch Bestandteile des Kupplungsreibbelages oder aus dem Motorraum heraustretendes Öl beeinträchtigt werden. In dem dort beschriebenen Wegsensor mit einer veränderlichen Induktion ist der Kolben aus einem ferromagnetischen Werkstoff hergestellt bzw. weist ferromagnetische Bestandteile auf. Neben den oben genannten Nachteilen der beiden Wegsensoren mit veränderlicher Kapazität bzw. Nachteilig bei allen drei Wegsensoren ist zusätzlich, daß sie nahe der Reibungskupplung angeordnet sind und somit durch die Bewegung der Reibungskupplung zu Schwingungen bzw. Bewegungen angeregt werden können. Durch diese Bewegungen wird das Meßsignal ebenfalls beeinflußt.

In der US Patentschrift US 4,705,151 ist ebenfalls ein Nehmerzylinder einer Nehmereinrichtung beschrieben, der einen Wegsensor mit einer veränderlichen Induktivität, Kapazität, Widerstand oder Induktion aufweist. Der dort beschriebene Wegsensor ist jedoch lediglich dazu vorgesehen, eine Extremstellung des Kolbens anzuzeigen. Die Messung der Stellung des Kolbens über den gesamten Verschiebeweg ist mit einem derartigen Wegsensor nicht möglich.

Aufgabe der Erfindung ist es eine Möglichkeit zu schaffen, mit der die Stellung eines Kolbens in einem feststehenden Nehmerzylinder einer kupplungsnahen Nehmereinrichtung zur Betätigung einer Reibungskupplung möglichst unabhängig von äußeren Einflüssen wie Verschmutzung, Erschütterungen oder Einflüsse durch benachbarte Bauteile, sensiert werden kann.

Die Aufgabe wird erfindungsgemäß durch die Merkmale des Anspruchs 1 gelöst. Vorteilhafte Aus- und Weiterbildungen sind in den Unteransprüchen gegeben.

Erfindungsgemäß wird vorgeschlagen, daß der Kolben aus einem nichtferromagnetischen elektrisch leitfähigen Metall besteht oder zumindest nichtferromagnetische elektrisch leitfähige metallische Bestandteile enthält oder mit diesen in fester Verbindung steht. Durch die Bewegung des Kolbens wird in dem nichtferromagnetischen elektrisch leitfähigen Metall ein Wirbelstrom induziert, durch den die Induktivität des Wegsensors verändert wird. Der Wegsensor ist Bestandteil eines Schwingkreises bestehend aus einer Kapazität und einer Induktivität. Durch die Veränderung der Induktivität des Wegsensors wird die Resonanzfrequenz des Schwingkreises verändert. Die Veränderung der Resonanzfrequenz dient dann als Meßsignal für den Verschiebeweg des Kolbens. Bei einer derartigen Sensoranordnung muß lediglich der Wegsensor mit einem elektrischen Kabel verbunden werden, der Kolben selbst muß nicht mit einem elektrischen Kabel verbunden werden. Die Verbindung eines bewegten Teiles mit einem Kabel ist somit nicht erforderlich.

Eventuell benachbart vorhandene ferromagnetische Bauteile, wie z. B. die Getriebewelle oder andere Teile, haben auf das Meßsignal keinen Einfluß. Die magnetische Permeabilität µᵣ von ferromagnetischen Bauteilen ist wesentlich größer als 1, aus diesem Grunde sind die in den ferromagnetischen Bauteilen induzierten Wirbelströme gegenüber den Wirbelströmen in den nichtferromagnetischen Bauteilen mit einer magnetischen Permeabilität von µᵣ ungefähr 1 vernachlässigbar. Erschütterungen oder Verunreinigungen haben, wie sich aus Versuchen ergeben hat, keinen Einfluß auf das Meßergebnis.

Weiterhin wird vorgeschlagen den Nehmerzylinder zwei- oder mehrteilig auszubilden und zumindest im Bereich zwischen dem Wegsensor und dem Kolben aus einem amagnetischen Werkstoff herzustellen. Dadurch wird eine Abschirmung des von dem Wegsensor erzeugten elektrischen Wechselfeldes durch eine gezielte Wahl des Werkstoffes oder Werkstoffbehandlung verhindert, ohne das der gesamte Nehmerzylinder aus dem Werkstoff hergestellt werden muß oder der Werkstoffbehandlung unterzogen werden muß.

Der Wegsensor ist zweckmäßiger Weise derart angeordnet, daß er den gesamten Verschiebeweg des Kolbens überdeckt, dadurch wird es ermöglicht die Stellung des Kolbens über den gesamten Verschiebeweg zu sensieren.

Besonders vorteilhaft ist es, wenn das nichtferromagnetisch elektrisch leitfähige Metall Aluminium ist. Aluminium hat den Vorteil, daß es einen besonders geringen elektrischen Widerstand hat und besonders leicht ist. Durch die gute elektrische Leitfähigkeit wird ein besonders gutes Meßsignal erreicht. Das geringe Gewicht des Werkstoffes ist in sofern vorteilhaft, das möglichst wenig Masse bei einer Ausrückbewegung bewegt werden muß.

Die Erfindung wird im folgenden anhand eines Ausführungsbeispiels näher erläutert. Die Zeichnungen zeigen:
- Figur 1: Prinzipdarstellung einer fluidbetätigten Reibungskupplung;
- Figur 2: kupplungsnahe Nehmereinrichtung mit radial außen liegendem Wegsensor;
- Figur 3: kupplungsnahe Nehmereinrichtung mit radial innen liegendem Wegsensor.

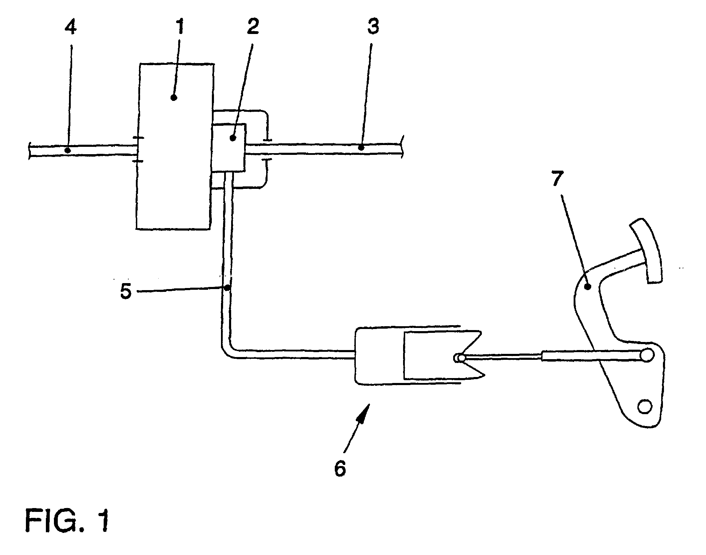

Figur 1 zeigt den prinzipiellen Aufbau einer fluidbetätigten Reibungskupplung. Ausgehend von einem Kupplungspedal 7 wird direkt ein Geberzylinder 6 beaufschlagt, der über eine Druckleitung 5 mit der in der Reibungskupplung 1 angeordneten Nehmereinrichtung 2 in Verbindung steht. Die Nehmereinrichtung 2 ist fest mit dem Gehäuse der Reibungskupplung 1 verbunden, und weist einen durch das Gehäuse 8 und die Führungshülse 9 gebildeten ringförmigen Nehmerzylinder mit dem Druckraum 13 und einen den Druckraum 13 verschließenden und in dem Nehmerzylinder bewegbaren Kolben 11 auf.

Durch Beaufschlagen der Nehmereinrichtung 2 mit Fluid wird es ermöglicht die Reibungskupplung 1 zu öffnen bzw. zu schließen und dadurch die Kraftübertragung von der Kurbelwelle 4 auf die Getriebewelle 3 zu unterbrechen.

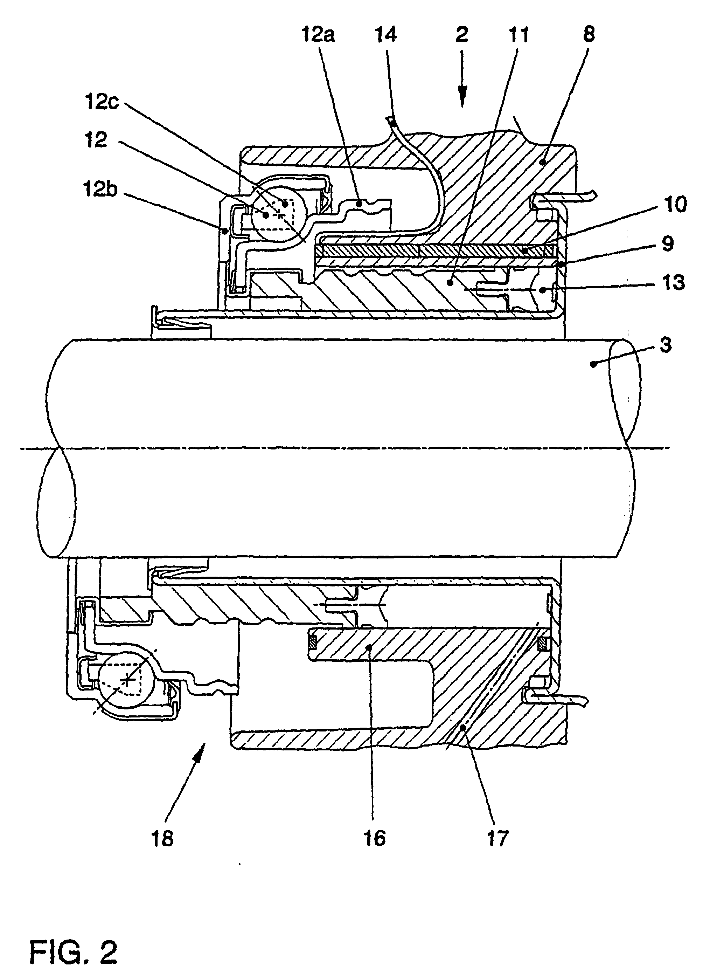

In Figur 2 ist eine Nehmereinrichtung 2 in Schnittdarstellung zu erkennen, wobei oberhalb der Symmetrielinie die Nehmereinrichtung 2 im eingerückten Zustand und unterhalb der Symmetrielinie im ausgerückten Zustand zu erkennen ist.

Die Nehmereinrichtung 2 ist konzentrisch zu der Getriebewelle 3 angeordnet. Die Nehmereinrichtung 2 besteht aus dem Nehmerzylinder, gebildet durch das Gehäuse 8 und die Führungshülse 9, und einer zu dem Nehmerzylinder bewegbaren Ausrückeinheit 18. In dem Gehäuse 8 ist eine Bohrung 17 vorgesehen, die an ihrem einen Ende mit der Druckleitung 5 in Verbindung steht und mit dem anderen Ende in den Druckraum 13 mündet.

Die Ausrückeinheit 18 besteht aus einem Kolben 11 und einem Ausrücklager 12. Der Kolben 11 liegt axial an der nicht umlaufenden Lagerhälfte 12a an. Die umlaufende Lagerhälfte 12b steht in kraftschlüssiger Verbindung mit einer nicht dargestellten ausrückbaren Reibungskupplungshälfte.

Der Druckraum 13 wird gebildet durch die Führungshülse 9 und den axialen Fortsatz 16 des Gehäuses 8. Verschlossen wird der Druckraum 13 durch den bewegbaren Kolben 11. Selbstverständlich können die Führungshülse 9 und das Gehäuse 8 auch einteilig ausgebildet sein.

Wird das Kupplungspedal 7 betätigt, dann wird ein Druck über den Geberzylinder 6 und die Druckleitung 5 und die Bohrung 17 in dem Druckraum 13 aufgebracht. Der Kolben 11 wird daraufhin in die ausgerückte Stellung, wie unterhalb der Symmetrielinie dargestellt, bewegt. Die Bewegung des Kolben 11 wird dann über die Lagerhälfte 12a, die Lagerkörper 12c und die Lagerhälfte 12b auf die ausrückbare nicht dargestellte Reibungskupplungshälfte übertragen, und dadurch der Kraftfluß von der Kurbelwelle 4 auf die Getriebewelle 3 unterbrochen.

Dem Gehäuse 8 ist ein sich im wesentlichen über den gesamten Verschiebeweg des Kolbens 11 erstreckender Wegsensor 10 zugeordnet.

Der Wegsensor 10 ist aus einem nicht dargestellten Sensorspulenkabel gebildet, an dem eine Wechselspannung anliegt. Durch die anliegende Wechselspannung ist der Wegsensor 10 umgeben von einem elektrischen Wechselfeld. Das Kabel 14 verbindet den Wegsensor 10 mit einer außerhalb der Nehmereinrichtung 2 angeordneten elektrischen Einrichtung zum Auswerten des Meßsignals. Das Kabel 14 kann selbstverständlich mehrere Leitungsstränge enthalten.

Der Kolben 11 besteht aus einem nichtferromagnetischen elektrisch leitenden Metall oder weist zumindest nicht ferromagnetische elektrisch leitfähige metallische Bestandteile auf oder steht mit diesen in fester Verbindung. Durch die Bewegung des Kolbens 11 senkrecht zu dem Wechselfeld wird in dem Kolben 11 ein Wirbelstrom induziert. Nichtferromagnetisch elektrisch leitfähige Metalle weisen eine magnetische Permeabilität µᵣ von ungefähr 1 auf. Ferromagnetisch leitfähige Metalle weisen dagegen eine magnetische Permeabilität von µᵣ wesentlich größer als 1 auf. Die induzierten Wirbelströme z. B. in der Getriebewelle 3 können deswegen im Vergleich zu den induzierten Wirbelströmen in dem Kolben 11 vernachlässigt werden. Die genauen Hintergründe über den Einfluß der magnetischen Permeabilität auf die induzierten Wirbelströme sind z. B. nachzulesen in VDI Fortschrittberichte, Reihe 8; Meß-, Steuerung- und Regelungstechnik, Nr. 557; Trennung der Einflußgrößen von Wirbelstromsensoren durch Signalverarbeitung mit Hilfe von Felduntersuchung und Modellierung, von M.Sc. Yunqiang Wang, Kassel.

Der induzierte Wirbelstrom in dem Kolben 11 wirkt nach der Lenz'schen Regel dem elektrischen Wechselfeld entgegen und verändert dadurch die Induktivität des Wegsensors 10 und damit die an ihm anliegende Wechselspannung.

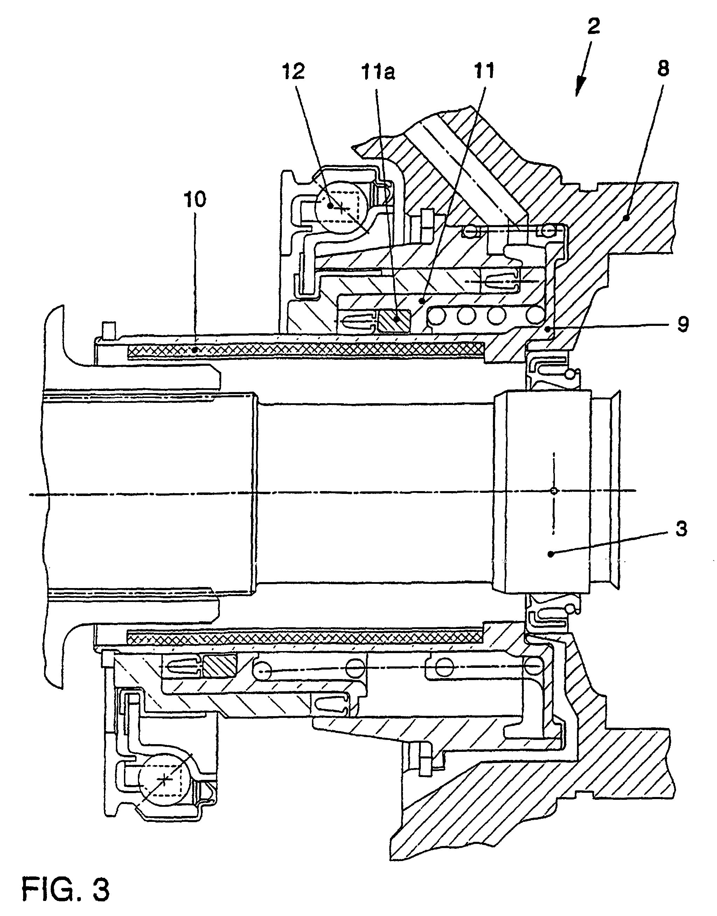

In Figur 3 ist eine Nehmereinrichtung 2 zu erkennen, bei der der Wegsensor 10 der Führungshülse 9 zugeordnet ist. Der Kolben 11 ist aus einem nichtmetallischen Werkstoff, wie z. B. einem Kunststoff, hergestellt und weist ein nichtferromagnetisch elektrisch leitfähiges Target 11a auf. In diesem Fall wird der Wirbelstrom in dem Target 11a induziert.

### BEZUGSZEICHENLISTE

- 1: Reibungskupplung
- 2: Nehmereinrichtung
- 3: Getriebewelle
- 4: Kurbelwelle
- 5: Druckleitung
- 6: Geberzylinder
- 7: Kupplungspedal
- 8: Gehäuse
- 9: Führungshülse
- 10: Wegsensor
- 11: Kolben
- 12: Ausrücklager
- 12a: Lagerhälfte
- 12b: Lagerhälfte
- 12c: Lagerkörper
- 13: Druckraum
- 14: Kabel
- 16: axialer Fortsatz
- 17: Bohrung
- 18: Ausrückeinheit

## Patentansprüche

1. Reibungskupplung für Kraftfahrzeuge mit einer zwischen Bauteilen einspannbaren Kupplungsscheibe, die drehfest auf einer Getriebewelle (3) sitzt , einer Kupplungsfeder zum Einspannen der Kupplungsscheibe zwischen den beiden Bauteilen, einer Kupplungsbetätigungseinrichtung mit einer kupplungsnahen Nehmereinrichtung (2) einer kupplungsfemen Gebereinrichtung (6) sowie einer dazwischen angeordneten Übertragungseinrichtung (5), wobei die kupplungsnahe Nehmereinrichtung (2) einen feststehenden Nehmerzylinder (8, 9) und einen darin bewegbaren Kolben (11) aufweist und im wesentlichen parallel zu dem Verschiebeweg des Kolbens (11) ein Wegsensor (10) mit einer veränderlichen Induktivität vorgesehen ist, **dadurch gekennzeichnet, daß** der Kolben (11) aus einem nichtferromagnetiscnen, elektrisch leitfähigen Metall besteht oder zumindest nichtferromagnetische, elektrisch leitfähige metallische Bestandteile (11a) enthält oder mit diesen in fester Verbindung steht.

2. Reibungskupplung nach Anspruch 1, **dadurch gekennzeichnet, daß** der Nehmerzylinder (8, 9) zwei- oder mehrteilig ausgebildet ist.

3. Reibungskupplung nach Anspruch 1 oder 2, **dadurch gekennzeichnet, daß** der Nehmerzylinder (8, 9) zumindest im Bereich zwischen dem Wegsensor (10) und dem Kolben (11) aus einem amagnetischen Werkstoff besteht.

4. Reibungskupplung nach Anspruch 1 oder 3, **dadurch gekennzeichnet, daß** der Wegsensor (10) in axialer Richtung eine Länge gleich oder größer als der Verschiebeweg des Kolbens (11) aufweist.

5. Reibungskupplung nach einem der Ansprüche 1 bis 4, **dadurch gekennzeichnet, daß** das nichtferromagnetische, elektrisch leitfähige Metall Aluminium ist.

## Claims

1. Friction clutch for motor vehicles, with a clutch disc which is capable of being clamped between structural parts and is seated fixedly in terms of rotation on a transmission shaft (3), with a clutch spring for clamping the clutch disc between the two structural parts, with a clutch actuation device having a near-clutch slave device (2), a clutch-distant master device (6) and a transmission device (5) arranged between them, the near-clutch slave device (2) having a fixed slave cylinder (8, 9) and a piston (11) movable in the latter, and a displacement sensor (10) of variable inductivity being provided essentially parallel to the displacement travel of the piston (11), **characterized in that** the piston (11) consists of non-ferromagnetic electrically conductive metal or contains at least non-ferromagnetic electrically conductive metallic components (11a) or is firmly connected to these.

2. Friction clutch according to Claim 1, **characterized in that** the slave cylinder (8, 9) is of two-part or multi-part design.

3. Friction clutch according to Claim 1 or 2, **characterized in that** the slave cylinder (8, 9) consists of a non-magnetic material at least in the region between the displacement sensor (10) and the piston (11).

4. Friction clutch according to Claim 1 or 3, **characterized in that** the displacement sensor (10) has in the axial direction a length equal to or greater than the displacement path of the piston (11).

5. Friction clutch according to one of Claims 1 to 4, **characterized in that** the non-ferromagnetic electrically conductive metal is aluminium.

## Revendications

1. Embrayage à friction pour véhicules automobiles, comprenant un disque d'embrayage pouvant être serré entre des composants, lequel repose fixe en rotation sur un arbre de transmission (3), un ressort d'accouplement pour serrer le disque d'embrayage entre les deux composants, un dispositif d'actionnement de l'embrayage avec un dispositif récepteur (2) proche de l'embrayage, un dispositif donneur (6) éloigné de l'embrayage, ainsi qu'un dispositif de transmission (5) disposé entre ceux-ci, le dispositif récepteur (2) proche de l'embrayage présentant un cylindre récepteur (8, 9) fixe et un piston (11) déplaçable dans celui-ci, et essentiellement parallèlement à la course de déplacement du piston (11), un capteur de position (10) étant prévu avec une inductance variable, **caractérisé en ce que** le piston (11) se compose d'un métal non ferromagnétique, conducteur de l'électricité, ou contient au moins des composants métalliques (11a) non ferromagnétiques, conducteurs de l'électricité, ou est connecté fixement avec ceux-ci.

2. Embrayage à friction selon la revendication 1, **caractérisé en ce que** le cylindre récepteur (8, 9) est réalisé en deux parties ou plus.

3. Embrayage à friction selon la revendication 1 ou 2, **caractérisé en ce que** le cylindre récepteur (8, 9) se compose, au moins dans la région entre le capteur de position (10) et le piston (11), d'un matériau non magnétique.

4. Embrayage à friction selon la revendication 1 ou 3, **caractérisé en ce que** le capteur de position (10) présente, dans la direction axiale, une longueur supérieure ou égale à la course de déplacement du piston (11).

5. Embrayage à friction selon l'une quelconque des revendications 1 à 4, **caractérisé en ce que** le métal non ferromagnétique, conducteur de l'électricité, est de l'aluminium.
